# EUROPÄISCHE PATENTANMELDUNG

(11) **EP 1 925 502 A2**
(43) Veröffentlichungstag der Anmeldung: **28.05.2008**
(21) Anmeldenummer: 07121201.3
(22) Anmeldetag: 21.11.2007
(51) Int. Cl.: B60R 11/02

(54) **Halterung für ein elektrisches Funktionsteil**

(30) Priorität: 27.11.2006 DE 102006056058
(71) Anmelder: OLHO-Technik Oleff + Holtmann oHG, 32584 Löhne (DE)
(72) Erfinder: Huncke, Thomas, 32584 Löhne (DE)
(74) Vertreter: Dantz, Jan Henning

(57) **Zusammenfassung**

Eine Halterung für ein elektrische Funktionsteil, insbesondere ein Navigationsgerät (2), das im Fahrsichtbereich eines Fahrers in einem Kraftfahrzeug angeordnet ist, ist so ausgebildet, dass die Halterung einen mit der fahrerseitigen A-Säule (6) des Kraftfahrzeuges verbundenen Haltearm (1) aufweist, der das elektrische Funktionsteil trägt.

## Beschreibung

Die Erfindung betrifft eine Halterung für ein elektrisches Funktionsteil, beispielsweise ein Navigationsgerät, ein Mobiltelefon o.dgl. entsprechend dem Oberbegriff des Anspruchs 1.

Zur Fahrerleichterung, insbesondere zur Fahrweg-Orientierung kommen mehr und mehr satellitengestützte Navigationsgeräte zum Einsatz, die in Verbindung mit entsprechender Software eine sehr genaue Navigation ermöglichen.

Dabei sind insoweit fahrzeugunabhängige Navigationsgeräte bekannt, die als Einzelkomponente beispielsweise an der Armaturentafel eines Kraftfahrzeuges befestigt und über einen fahrzeugseitigen Stromanschluss, wie einen Zigarettenanzünder oder dergleichen, oder über eigene Quellen mit Betriebsstrom versorgt werden, hier insbesondere mit Batterien oder Akkus.

Die Befestigung solcher sozusagen fahrzeugfremden Navigationsgeräte erfolgt insbesondere mittels Saugnäpfen, die entweder an der Armaturentafel oder der Windschutzscheibe des Kraftfahrzeuges anhaften.

Diese Art der Halterung ist jedoch mit einer ganzen Reihe von Nachteilen verbunden, so dass der Einsatz dieser Navigationsgeräte nur als behelfsmäßig bezeichnet werden kann.

Insbesondere eine dauerhafte Halterung ist nicht gewährleistet, was insbesondere dann problematisch wird, wenn verkehrsbedingte Situationen entstehen, die besondere Beanspruchungen an die Haftfestigkeit stellen, wie dies beispielsweise bei einem plötzlichen starken Bremsen oder bei einem Unfall der Fall ist. Hierbei kann es durchaus zu einem Lösen des Navigationsgeräts aus seiner Halteposition kommen, so dass es unkontrolliert durch den Fahrgastraum schleudern kann mit einem entsprechenden Verletzungsrisiko für die Insassen.

Daneben wird auch die fahrzeugseitige Stromversorgung als störend empfunden, da in jedem Fall ein Kabel von dem Navigationsgerät zu der jeweiligen Stromquelle geführt sein muss.

Weiter sind Navigationsgeräte bekannt, die in das Fahrzeug integriert sind, üblicherweise in der Armaturentafel oder in angrenzenden Bauteilen. Hierzu ist jedoch eine angepasste Konfiguration des Fahrzeugs erforderlich, wobei dann, wenn die Navigationsgeräte als Zubehörteile des Fahrzeugherstellers im Angebot sind und deren Einbau vom Kunden nicht gewünscht wird, ein anderes Bauteil zum Einsatz kommt als in dem Fall, da das Fahrzeug mit einem Navigationsgerät ausgerüstet werden soll.

Aus betriebswirtschaftlichen Gründen stellt dies eine unbefriedigende Lösung dar, da sie die Herstellungskosten insgesamt nachteilig beeinflusst.

Darüber hinaus ist eine Nachrüstung mit einem auf das Fahrzeug abgestimmten Navigationsgerät praktisch nicht möglich, so dass auf ein universelles Gerät zurückgegriffen werden muss, wie bereits beschrieben.

Der Erfindung liegt daher die Aufgabe zugrunde, eine Halterung der gattungsgemäßen Art so weiterzuentwickeln, dass sie konstruktiv einfachst aufgebaut ist, kostengünstig herstell- und montierbar ist und eine sichere Befestigung für ein elektrisches Funktionsteil bildet.

Diese Aufgabe wird durch eine Halterung mit den Merkmalen des Anspruchs 1 gelöst.

Eine in diesem Sinn ausgebildete Halterung bietet gegenüber denen nach dem Stand der Technik erhebliche Vorteile.

So kann beispielsweise auf eine besondere Gestaltung der Armaturentafel verzichtet werden, wie sie z.B. bei fest installierten Navigationsgeräten erforderlich ist. Ohne wesentlichen Aufwand kann das Kraftfahrzeug bei Kundenwunsch mit einem Navigationsgerät ausgerüstet werden, wodurch sich naturgemäß die Fertigung des Kraftfahrzeuges einfacher und kostengünstiger darstellt.

Prinzipiell ist es möglich, das Kraftfahrzeug auch nachträglich mit einem Navigationsgerät bzw. der dafür vorgesehen Halterung auszurüsten. Hierzu sind lediglich entsprechende Kabelanschlüsse vorzusehen, was bereits werksseitig in der Serienausstattung erfolgen kann. In jedem Fall sind die für den Betrieb des Navigationsgeräts notwendigen Kabel verdeckt angeordnet, wobei die, die unmittelbar zum Navigationsgerät führen, im Haltearm der neuen Halterung verlegt sind.

Nach einer vorteilhaften Weiterbildung der Erfindung ist vorgesehen, dass der Haltearm an seinem der A-Säule abgewandten Ende ein Anschlusselement aufweist, an dem das elektrische Funktionsteil festgelegt ist, wobei dieses Anschlusselement vorzugsweise als Rasteinrichtung ausgebildet ist, durch die das elektrische Funktionsteil verrastet gehalten wird.

Dieses Anschlusselement kann im Sinne eines Gelenkes mit dem Haltearm im Übrigen verbunden sein, so dass das elektrische Funktionsteil in allen erforderlichen Richtungen verschwenkbar ist, wodurch eine auf den jeweiligen Fahrer des Kraftfahrzeuges sowie auf den jeweiligen Fahrzeugtyp ausgerichtete Verstellung möglich ist.

Dabei soll die Verstellung einerseits werkzeugfrei erfolgen, andererseits in eingestellter Stellung so gehemmt sein, dass eine selbsttätige Verstellung, beispielsweise durch fahrbedingte Erschütterungen, nicht möglich ist.

Daneben oder alternativ kann auch die Anbindung des Haltearmes an der A-Säule, die im Übrigen definitionsgemäß die Verbindung zwischen dem Fahrzeugdach und der Motorhaube bildet, gelenkartig ausgebildet sein, wobei hier bevorzugt ein selbsthemmendes Kugelgelenk zum Einsatz kommt.

Weiter zeichnet sich die neue Halterung dadurch aus, dass sie insbesondere durch ihre Verstellmöglichkeiten sowohl an der links- wie auch an der rechtsseitigen A-Säule befestigt werden kann. Letztere Möglichkeit für den Fall, dass das Fahrzeug für den Betrieb im Linksverkehr ausgerüstet ist.

Zweckmäßigerweise ist die Halterung mit der A-Säule verschraubt, wozu am Haltearm eine Konsole angeschlossen ist, die überdies das genannte Kugelgelenk enthält.

Diese Art der Befestigung ermöglicht eine Demontage der Halterung ohne dass nennenswerte Beschädigungen an der Verkleidung der A-Säule entstehen.

Ein weiterer Gedanke der Erfindung sieht vor, dass die Konsole zweiteilig ausgebildet ist und aus einem mit der A-Säule verbundenen Sockel und einem darauf vorzugsweise in Achsrichtung der A-Säule verschiebbar befestigten, den Haltearm tragenden Oberteil besteht.

Eine teleskopartige Ausbildung des Haltearmes in Kombination mit den übrigen genannten Verstellmöglichkeiten erlaubt eine Verstellung des elektrischen Funktionsteiles in x-, y- und z-Richtung.

Durch die verrastete Befestigung des elektrische Funktionsteiles mit dem Haltearm bzw. dessen Anschlusselement, das mit den durch den Haltearm geführten elektrischen Anschlüssen korrespondierende Steckkontakte aufweist, kann das elektrische Funktionsteil problemlos entnommen werden, wodurch ein bester Diebstahlschutz erreicht wird.

Gegenüber dem zum Stand der Technik bereits beschriebenen separaten Navigationsgeräten, die beispielsweise durch Saugnäpfe an der Armaturentafel oder an der Windschutzscheibe befestigt werden, bietet die neue Halterung auch erhebliche Sicherheitsvorteile.

So ist durch die Anordnung der Halterung an der fahrzeugseitigen A-Säule der Monitor des Navigationsgerätes im Sichtbereich frei von Spiegelungen. Dies erlaubt eine störungsfreie Benutzung, die ebenso zur Sicherheit beiträgt, wie die uneingeschränkte Sicht des Fahrers nach vorne, da sich die Halterung und das Navigationsgerät außerhalb des Sichtbereiches befinden.

Dieser Bereich liegt auch außerhalb einer Kopfaufschlag-Zone, so dass bei einem Unfall das Navigationsgerät bzw. die Halterung keine Gefährdung darstellen.

Wie erwähnt beschränkt sich der Einsatz der Halterung nicht auf ein Navigationsgerät, sondern ist für alle denkbaren elektrischen Funktionsteile, wie Handys o.dgl. einsetzbar.

Weitere vorteilhafte Ausbildungen der Erfindung sind in den Unteransprüchen gekennzeichnet.

Ein Ausführungsbeispiel wird nachfolgend anhand der beigefügten Zeichnungen beschrieben.

Es zeigen:
- Figur 1: eine montierte Halterung in einer perspektivischen Vorderansicht

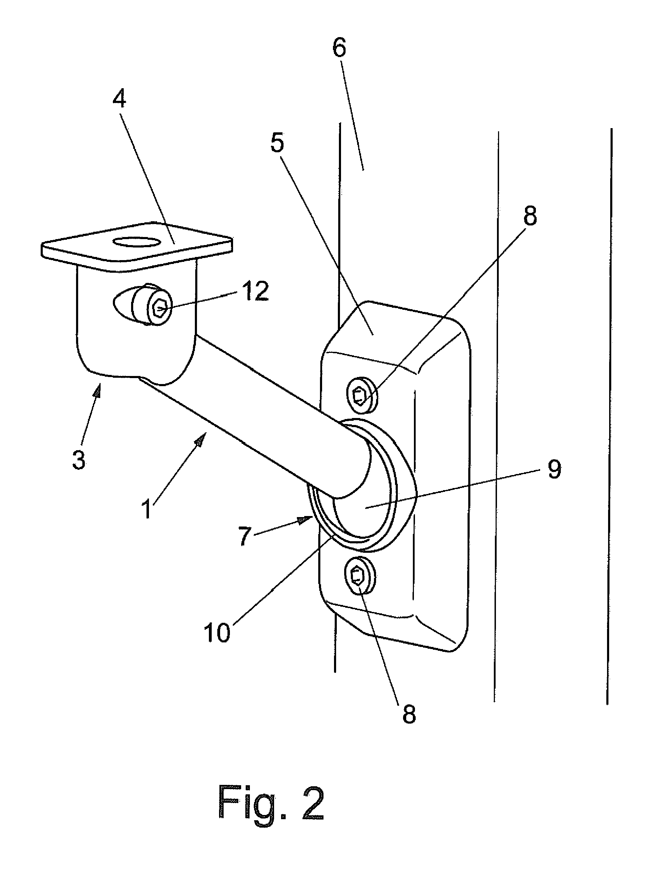

- Figur 2: die Halterung in einer perspektivischen Rückansicht
- Figur 3: einen Längsschnitt durch die Halterung.

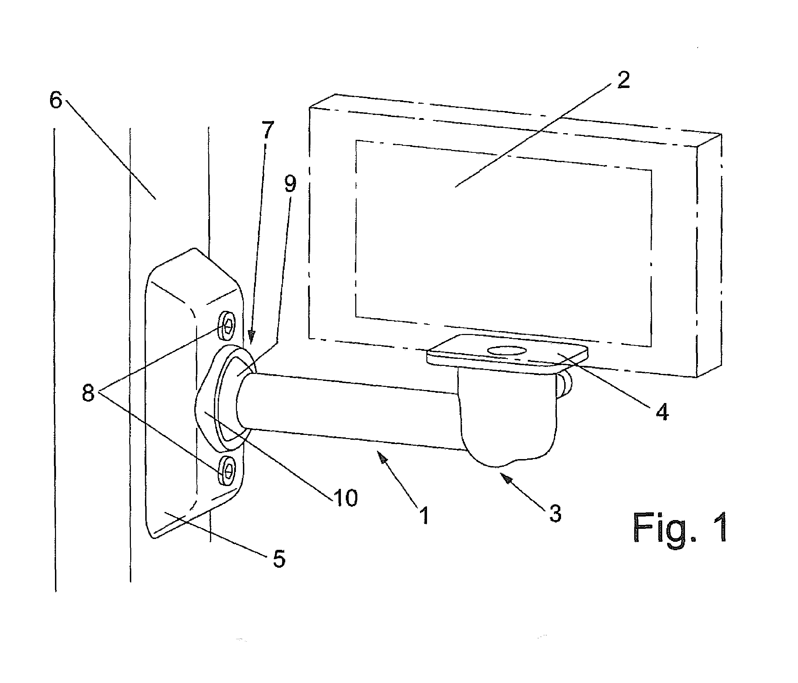

In den Figuren ist eine Halterung für ein Navigationsgerät 2 dargestellt, das in der Figur 1 strichpunktiert angedeutet ist. Diese Halterung ist im Fahrsichtbereich eines Fahrers in einem Kraftfahrzeug angeordnet und weist erfindungsgemäß einen Haltearm 1 auf, der mit der fahrerseitigen A-Säule 6 des Kraftfahrzeuges verbunden ist und der andererseits das Navigationsgerät 2 trägt.

Dieses ist über ein Anschlusselement 3 mittels einer Anschlussplatte 4 vorzugsweise lösbar verbunden, wobei das Anschlusselement 3 im Ausführungsbeispiel am Haltearm 1 mittels einer Klemmschraube 12 am Haltearm 1 gehalten ist.

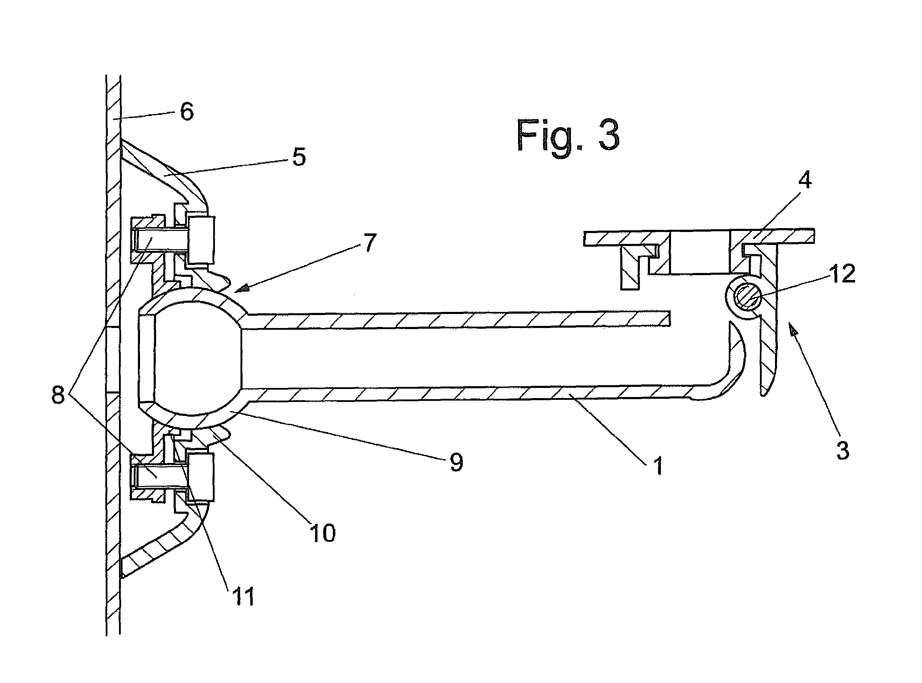

Wie insbesondere in der Figur 3 deutlich zu erkennen ist, ist der Haltearm 1 mit seinem anderen Ende durch ein Gelenk 7 an der Konsole 5 befestigt, wobei dieses Gelenk 7 als Kugelgelenk ausgebildet ist mit einer am Haltearm 1 angeformten Kugel 9 sowie einer Lagerpfanne 10 der Konsole 5 in Kombination mit einer Klemmpfanne 11, die über Schrauben 8, die durch die Konsole 5 geführt sind, gegen die Kugel 9 derart anpressbar ist, dass der Haltearm 1 unter Überwindung eines Reibwiderstandes in seiner Position veränderbar ist und individuell an den jeweiligen Nutzer, d.h. den Fahrer des Kraftfahrzeuges anpassbar ist.

Hierzu ist auch eine entsprechende Verschwenkung des Aufnahmeelementes 3 erforderlich, so dass das auf der Anschlussplatte 4 aufliegende und daran befestigte Navigationsgerät 2 in einer waagerechten Funktionsstellung verbleibt. Hierzu ist die Klemmschraube 11 zu lösen bzw. zur Arretierung des Anschlusselementes 3 festzuziehen.

### Bezugszeichenliste

- 1: Haltearm
- 2: Navigationsgerät
- 3: Anschlusselement
- 4: Anschlussplatte
- 5: Konsole
- 6: A-Säule
- 7: Gelenk
- 8: Schraube
- 9: Kugel
- 10: Lagerpfanne
- 11: Klemmpfanne
- 12: Klemmschraube

## Patentansprüche

1. Halterung für ein elektrische Funktionsteil, insbesondere ein Navigationsgerät (2), das im Fahrsichtbereich eines Fahrers in einem Kraftfahrzeug angeordnet ist, **dadurch gekennzeichnet, dass** die Halterung einen mit der fahrerseitigen A-Säule (6) des Kraftfahrzeuges verbundenen Haltearm (1) aufweist, der das elektrische Funktionsteil trägt.

2. Halterung nach Anspruch 1, **dadurch gekennzeichnet, dass** der Haltearm (1) schwenkbar an der A-Säule (6) befestigt ist.

3. Halterung nach Anspruch 1 oder 2, **dadurch gekennzeichnet, dass** der Haltearm (1) mittels eines Gelenkes (7) an der A-Säule (6) befestigt ist.

4. Halterung nach einem der vorhergehenden Ansprüche, **dadurch gekennzeichnet, dass** das Gelenk (7) selbsthemmend ausgebildet ist.

5. Halterung nach einem der vorhergehenden Ansprüche, **dadurch gekennzeichnet, dass** der Haltearm (1) bzw. das Gelenk (7) in einer Konsole (5) gehalten ist, die mit der A-Säule (6) verbunden ist.

6. Halterung nach einem der vorhergehenden Ansprüche, **dadurch gekennzeichnet, dass** die Konsole (5) zweiteilig ausgebildet ist und aus einem an der A-Säule (6) befestigten Sockel und einem daran verschiebbar angeschlossenen, den Haltearm (1) tragenden Oberteil besteht.

7. Halterung nach einem der vorhergehenden Ansprüche, **dadurch gekennzeichnet, dass** das Oberteil in Längsrichtung der A-Säule verschiebbar ist.

8. Halterung nach einem der vorhergehenden Ansprüche, **dadurch gekennzeichnet, dass** das Gelenk (7) als Kugelgelenk ausgebildet ist.

9. Halterung nach einem der vorhergehenden Ansprüche, **dadurch gekennzeichnet, dass** der Haltearm (1) als Teleskoparm ausgebildet ist.

10. Halterung nach einem der vorhergehenden Ansprüche, **dadurch gekennzeichnet, dass** der Haltearm (1) an einem Ende eine angeformte Kugel (9) aufweist, die in einer Lagerpfanne (10) und einer Klemmpfanne (11) der Konsole (5) gehalten ist.

11. Halterung nach einem der vorhergehenden Ansprüche, **dadurch gekennzeichnet, dass** die Konsole (5) mit der A-Säule (6) verschraubt ist.

12. Halterung nach einem der vorhergehenden Ansprüche, **dadurch gekennzeichnet, dass** das Navigationsgerät (2) an einem Anschlusselement (3) des Haltearmes (1) befestigt ist.

13. Halterung nach einem der vorhergehenden Ansprüche, **dadurch gekennzeichnet, dass** das Anschlusselement (3) als Rasteinrichtung ausgebildet ist.

14. Halterung nach einem der vorhergehenden Ansprüche, **dadurch gekennzeichnet, dass** das Anschlusselement (3) eine schwenkbar am Haltearm (1) befestigte Anschlussplatte (4) aufweist, die mittels einer Klemmschraube (11) festsetzbar ist.

15. Halterung nach einem der vorhergehenden Ansprüche, **dadurch gekennzeichnet, dass** das Navigationsgerät (2) mit dem Anschlusselement (3) lösbar verbunden ist.

16. Halterung nach einem der vorhergehenden Ansprüche, **dadurch gekennzeichnet, dass** das Navigationsgerät (2) mit dem Anschlusselement (3) verrastet ist.

17. Halterung nach einem der vorhergehenden Ansprüche, **dadurch gekennzeichnet, dass** das Anschlusselement (3) Steckkontakte aufweist, die mit entsprechenden Kontakten des Navigationsgeräts (2) korrespondieren.

18. Halterung nach einem der vorhergehenden Ansprüche, **dadurch gekennzeichnet, dass** die Steckkontakte an durch den Haltearm (1) geführten Kabeln befestigt sind.
